# EUROPEAN PATENT APPLICATION

(11) **EP 2 322 587 A1**
(43) Date of publication of application: **18.05.2011**
(21) Application number: 09174849.1
(22) Date of filing: 03.11.2009
(51) Int. Cl.: C09K 9/02, B41M 5/327

(54) **Thermochromic compositions**

(71) Applicant: BASF SE, 67056 Ludwigshafen (DE)
(72) Inventor: The designation of the inventor has not yet been filed
(74) Representative: Schumacher, Richard Horst Dietrich

(57) **Abstract**

The present invention provides a thermochromic composition which comprises
iv) an electron-donating colour former of formula 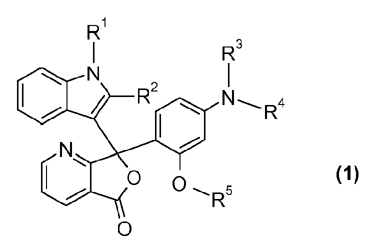 wherein R¹ is C₆₋₂₀-alkyl, and R², R³, R⁴ and R⁵ are the same or different and are C₁₋₆-alkyl,
v) an electron-accepting colour developer of formula 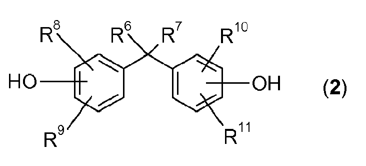 wherein R⁶ and R⁷ are the same or different and are hydrogen, C₁₋₂₀-alkyl, or R⁶ and R⁷ together with the linking carbon atom form a C₅₋₈-cycloalkylidene, and R⁸ and R⁹ are the same or different and are hydrogen, C₁₋₆-alkyl, halogen or hydroxyl,
or
an electron-accepting colour developer of formula 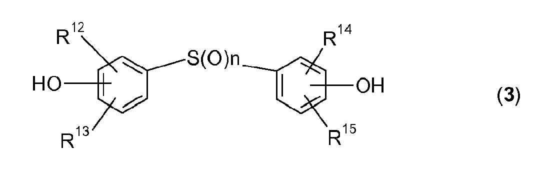 wherein n is 0, 1 or 2, and R¹², R¹³, R¹⁴ and R¹⁵ are the same or different and are hydrogen, C₁₋₆-alkyl, halogeno or hydroxyl,
and
vi) a compound which adjusts the colour change temperature.

It also provides microcapsules comprising the thermochromic composition of the present invention, aqueous dispersions comprising these microcapsules, ink compositions comprising these microcapsules, and substrates printed with these ink compositions.

## Description

The invention relates to thermochromic compositions, microcapsules comprising the thermochromic compositions, aqueous dispersions comprising these microcapsules, ink compositions comprising these microcapsules, and substrates printed with these ink compositions.

Thermochromism is the ability of a compound to reversibly change colour due to a change of temperature. Exampes of thermochromic compounds are leuco dyes.

Thermochromic compositions based on leuco dyes are known in the art.

GB 1 405 701 describes thermochromic compositions comprising (A) at least one electron-donating chromatic compound selected from fluoran leuco compounds, triphenylmethane phthalide compounds and lactam leuco compounds (B) at least one compound having a phenolic hydroxyl group such as bisphenol A and (C) at least one compound which is an alcohol such as cetyl alcohol, an ester, a ketone or an ether.

US 4,028118 A describes thermochromic compositions comprising (A) an electron-donating chromatic compound, (B) a compound containing a phenolic hydroxyl group such as bisphenol A, (C) a compound selected from the group consisting of higher aliphatic monovalent alcohols such as cetyl alcohol and (D) a compound selected from the group consisting of higher aliphatic monovalent acid alcohol esters such as lauryl palmitate.

US 5,281,570 A describes thermochromic compositions comprising (a) an electron-donative colour former such as 3-(4-diethylamino-2-ethoxyphenyl)-3-(2-methyl-1-octylindol-3-yl)-4-azaphthalide, (b) a sulfide, sulfoxide or sulfone containing a hydroxyl phenyl radical and (c) a chemical compound selected from alcohols such as cetyl alcohol, esters such as lauryl palmitate, ethers, ketones, carboxylic acids or acid amides.

EP 0 781 667 A2 describes thermochromic compositions of improved light-fastness which compositions comprise (a) an electron-donating compound, (b) an electron-accepting, light fastness providing compound, (c) a metachromatic temperature adjuster such as hexadecylalcohol (cetyl alcohol), and optionally an electron-accepting compound that does not provide light-fastness such as 2,2-bis-(4-hydroxyphenyl)-propane (bisphenol A).

US 5,879,438 A describes thermochromic compositions comprising (a) an electron donating compound, (b) an electron-accepting compound such as 2,2-bis-(4-hydroxyphenyl)-propane (bisphenol A), (c) a metachromic temperature adjuster such as hexadecylalcohol (cetyl alcohol) and (d) an electron accepting light-fastness providing agent.

EP 1 179 435 A1 describes thermochromic compositions having improved light-fastness, which composition comprises (a) an electron donating compound, (b) an electron accepting compound having ultraviolet absorbing capacity, (c) a discoloration temperature adjuster such as hexadecyl alcohol (cetyl alcohol), and (d) an electron accepting light-fastness providing agent.

It was the object of the present application to provide thermochromic compositions based on leuco dyes of improved light-fastness.

This object is solved by the thermochromic composition of claim 1, the microcapsules of claim 14, the aqueous dispersion of claim 16, the ink composition of claim 17, and the substrate of claim 19.

The thermochromic composition of the present invention comprises
i) an electron-donating colour former of formula 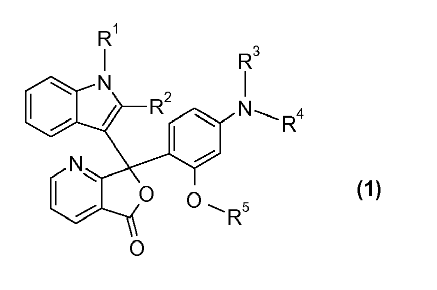 wherein R¹ is C₆₋₂₀-alkyl, and R², R³, R⁴ and R⁵ are the same or different and are C₁₋₆-alkyl,
ii) an electron-accepting colour developer of formula 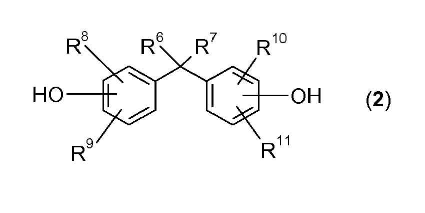 wherein R⁶ and R⁷ are the same or different and are hydrogen, C₁₋₂₀-alkyl, or R⁶ and R⁷ together with the linking carbon atom form a C₅₋₈-cycloalkylidene, and R⁸ and R⁹ are the same or different and are hydrogen, C₁₋₆-alkyl, halogen or hydroxyl,
   or
   an electron-accepting colour developer of formula 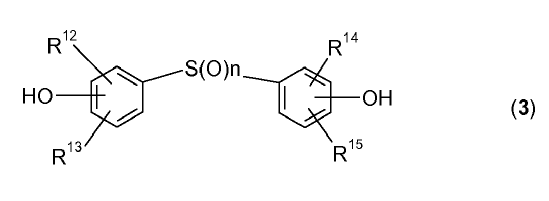 wherein n is 0, 1 or 2, and R¹², R¹³, R¹⁴ and R¹⁵ are the same or different and are hydrogen, C₁₋₆-alkyl, halogeno or hydroxyl,
   and
(iii) a compound which adjusts the colour change temperature.

Examples of C₆₋₂₀-alkyl are hexyl, heptyl, octyl, nonyl, decyl, undecyl, dodecyl, tetradecyl, hexadecyl, octadecyl and eicosanyl. Examples of C₁₋₆-alkyl are methyl, ethyl, propyl, isopropyl, butyl, *sec*-butyl, *tert*-butyl, pentyl and hexyl. Examples of C₁₋₂₀-alkyl are methyl, ethyl, propyl, isopropyl, butyl, *sec*-butyl, *tert*-butyl, pentyl, hexyl heptyl, octyl, nonyl, decyl, undecyl, dodecyl, tetradecyl, hexadecyl, octadecyl and eicosanyl. Examples of halogeno are fluoro, chloro, bromo and iodo.

Examples of an electron-donating colour former of formula (1) are Pergascript® Blue I-2G, (which is identical to 7-[4-(diethylamino)-2-ethoxy-phenyl]-7-(2-methyl-1-octyl-1 H-indol-3-yl)-furo[3,4-b]pyridin-5(7H)-one or 3-(4-diethylamino-2-ethoxyphenyl)-3-(2-methyl-1-octylindol-3-yl)-4-azaphthalide), 7-[4-(dimethylamino)-2-ethoxy-phenyl]-7-(2-methyl-1-octyl-1 H-indol-3-yl)-furo[3,4-b]pyridin-5(7H)-one, 7-[4-(diethylamino)-2-methoxy-phenyl]-7-(2-methyl-1-octyl-1H-indol-3-yl)furo[3,4-b]pyridin-5(7H)-one, 7-[4-(diethylamino)-2-methoxy-phenyl]-7-(2-methyl-1-heptyl-1 H-indol-3-yl)furo[3,4-b]pyridin-5(7H)-one and 7-[4-(diethylamino)-2-methoxy-phenyl]-7-(2-methyl-1-nonyl-1 H-indol-3-yl)furo[3,4-b]pyridin-5(7H)-one.

The electron-donating colour formers of formula (1) can be prepared by methods known in the art, for example by the method described in JP 07-278451.

An electron-donating colour former of formula (1) is preferred wherein R¹ is C₇₋₁₀-alkyl such as heptyl, octyl, nonyl and decyl, and R², R³, R⁴ and R⁵ are the same or different and are C₁₋₄-alkyl. An electron-donating colour former of formula (1) is preferred wherein, R¹ is C₇₋₉-alkyl such as heptyl, octyl and nonyl, and R², R³, R⁴ and R⁵ are the same or different and are C₁₋₂-alkyl such as ethyl and methyl.

Examples of C₁₋₄-alkyl are methyl, ethyl, propyl, isopropyl, butyl, *sec*-butyl and *tert*-butyl.

A particular preferred colour former of formula (1) is the colour former of formula

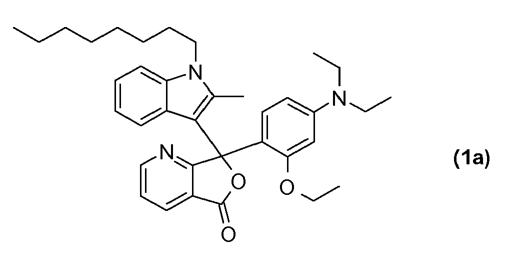

The electron-donating colour former of formula **1a** is also known as Pergascript® Blue I-2G, 7-[4-(diethylamino)-2-ethoxy-phenyl]-7-(2-methyl-1-octyl-1 H-indol-3-yl)furo[3,4-b]pyridin-5(7H)-one or 3-(4-diethylamino-2-ethoxyphenyl)-3-(2-methyl-1-octylindol-3-yl)-4-azaphthalide.

Examples of electron-accepting colour developers of formula (2) are 2,2-bis-(4-hydroxyphenyl)-propane (bisphenol A), 4,4'-cyclohexylidenbisphenol (bisphenol Z), 1,1-bis(4-hydroxyphenyl)-2-ethylhexane and 1,1-bis(3-methyl-4-hydroxyphenyl)hexadecane.

An example of an electron-accepting colour developer of formula (3) is bis(4-hydroxyphenyl)-sulfon (bisphenol S).

The electron-accepting colour developers of formula (2) are preferred.

Particular preferred electron-accepting colour developers of formula (2) are those of formula 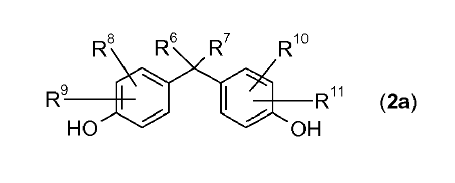 wherein R⁶ and R⁷ are the same or different and are hydrogen, C₁₋₄-alkyl, and R⁸ and R⁹ are the same or different and are hydrogen, C₁₋₆-alkyl, halogen or hydroxyl.

More preferred electron-accepting colour developers of formula (2) are those of formula 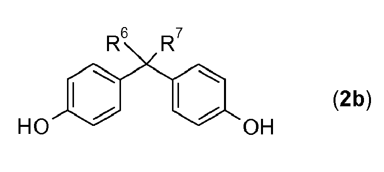 wherein R⁶ and R⁷ are the same or different and are hydrogen, C₁₋₄-alkyl, preferably C₁₋₂-alkyl.

Examples of C₁₋₂-alkyl are methyl and ethyl.

The most preferred electron-accepting colour developer of formula (2) is the one of formula

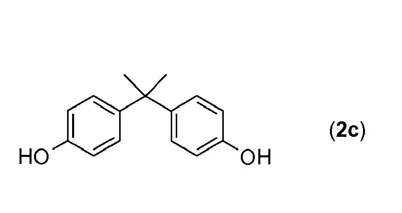

The electron-accepting colour developer of formula **2c** is also known as bisphenol A or 2,2-bis-(4-hydroxyphenyl)-propane.

The molar ratio of the electron-donating colour former of formula (1)/electron-accepting colour developer of formula (2) can be from 20/1 to 1/20, preferably from 10/1 to 1/10, more preferably from 1/1 to 1 /10, most preferably from 1/2 to 1/6.

The compound which adjusts the colour change temperature can be selected from the group consisting of aliphatic alcohols having 10 to 40 carbon atoms, esters having 10 to 40 carbon atoms, ketones having 10 to 40 carbon atoms, ethers having 10 to 40 carbon atoms and mixtures thereof.

Examples of aliphatic alcohols having 10 to 40 carbon atoms are 1-decanol, lauryl alcohol, myristyl alcohol, cetyl alcohol, stearyl alcohol, arachidyl alcohol, behenyl alcohol, melissyl alcohol, and oleyl alcohol.

Preferred aliphatic alcohols having 10 to 40 carbon atoms are saturated aliphatic alcohols having 10 to 30 carbon atoms, more preferably, 14 to 20 carbon atoms such as myristyl alcohol, cetyl alcohol, stearyl alcohol and arachidyl alcohol. Particular preferred is cetyl alcohol.

Examples of esters having 10 to 40 carbon atoms are esters of aliphatic alcohols and aliphatic carboxylic acids having in total 10 to 40 carbon atoms, esters of aliphatic alcohols and aromatic carboxylic acids having in total 10 to 40 carbon atoms, esters of aromatic alcohols and aliphatic carboxylic acids having in total 10 to 40 carbon atoms.

Examples of esters of aliphatic alcohols and aliphatic carboxylic acids having in total 10 to 40 carbon atoms are octyl caprylate, decyl caprylate, octyl caprate, decyl caprate, cetyl caprate, stearyl caprate, butyl laurate, octyl laurate, lauryl laurate, stearyl laurate, butyl myristate, decyl myristate, myristyl myristate, cetyl myristate, octyl palmitate, lauryl palmitate, butyl stearate, decyl stearate, lauryl stearate and stearyl stearate.

Preferred esters of aliphatic alcohols and aliphatic carboxylic acids having in total 10 to 40 carbon atoms are esters of aliphatic alcohols and aliphatic carboxylic acids having in total 24 to 32 carbon atoms such as cetyl caprate, stearyl caprate, lauryl laurate, stearyl laurate, decyl myristate, myristyl myristate, cetyl myristate, octyl palmitate, lauryl palmitate, decyl stearate and lauryl stearate. Particular preferred is lauryl palmitate.

Preferred compounds which adjust the colour change temperature are selected from the group consisting of aliphatic alcohols having 10 to 40 carbon atoms, esters having 10 to 40 carbon atoms and mixtures thereof.

Preferred compounds which adjust the colour change temperature are mixtures of aliphatic alcohols having 10 to 40 carbon atoms and esters having 10 to 40 carbon atoms.

Preferred compounds which adjust the colour change temperature are mixtures of saturated aliphatic alcohols having 10 to 30 carbon atoms, preferably 14 to 20 carbon atoms, and esters of an aliphatic alcohol and an aliphatic carboxylic acid having in total 10 to 40 carbon atoms, preferably 24 to 32 carbon atoms.

Preferred compounds which adjust the colour change temperature are mixtures of cetyl alcohol and lauryl palimate.

The molar ratio of the aliphatic alcohol having 10 to 40 carbon atoms/ester of having 10 to 40 carbon atoms can be from 15/1 to 1/15, preferably from 10/1 to 1/10 or from 5/1 to 1/5, more preferably from 5/1 to 1/1 or from 3/1 to 2/1.

In a preferred embodiment of the invention, the compound which adjusts the colour change temperature can be a wax-like compound. Wax-like compounds are malleable at ambient temperature (18 to 25 °C), have a melting point in the range of 35 to 85 °C, preferably in the range of 40 to 65°C, and are insoluble in water. Preferably, the wax-like compounds have also a relatively low-viscosity when melted.

The thermochromic composition of the present invention can also comprise a UV absorber. Examples of UV absorbers are benzotriazole-based UV absorbers. Examples of benzotriazole-based UV absorbers are 2-(3-*tert*-butyl-2-hydroxy-5-methylphenyl)-5-chlorobenzotriazole (sold under the tradename Ciba® Tinuvin® 326), 2-(5-*tert*-butyl-2-hydroxyphenyl)-benzotriazole, 2-(2-hydroxy-5-methylphenyl)-benzotriazole, 2-(3,5-di-*tert*-butyl-2-hydroxyphenyl)-benzotriazole, 2-(3-*tert*-butyl-2-hydroxyphenyl)-5-chlorobenzotriazole, 2-(3,5-di-*tert-*amyl-2-hydroxyphenyl)-benzotriazole, 2-(3-dodecyl-2-hydroxy-5-methylphenyl)-benzotriazole and mixtures thereof.

A particular preferred UV absorber is 2-(3-*tert*-butyl-2-hydroxy-5-methylphenyl)-5-chlorobenzotriazole (sold under the tradename Ciba® Tinuvin® 326).

The weight ratio of the compound which adjusts the colour change temperature/(an electron-donating colour former of formula (1) + an electron-accepting colour developer of formula (2) + optional a UV absorber) can be from 20/1 to 1/20 or from 10/1 to 1/10, preferably from 10/1 to 1/1, more preferably from 5/1 to 2/1.

The thermochromic composition of the present invention can also comprise additional compounds such as dyes, pigments or antioxidants.

A particular preferred thermochromic composition comprises
i) an electron-donating colour former of formula 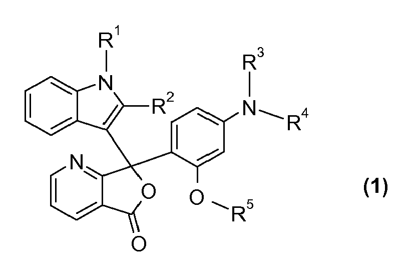 wherein R¹ is C₇₋₁₀-alkyl such as heptyl, octyl, nonyl and decyl, and R², R³, R⁴ and R⁵ are the same or different and are C₁₋₄-alkyl,
ii) an electron-accepting colour developer of formula 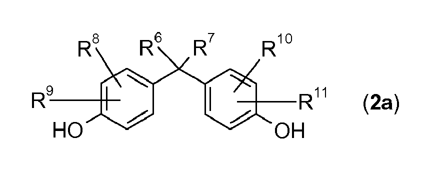 wherein R⁶ and R⁷ are the same or different and are hydrogen, C₁₋₄-alkyl, and R⁸ and R⁹ are the same or different and are hydrogen, C₁₋₆-alkyl, halogen or hydroxyl,
(iii) a compound which adjusts the colour change temperature, which compound is selected from the group consisting of aliphatic alcohols having 10 to 40 carbon atoms, esters having 10 to 40 carbon atoms, ketones having 10 to 40 carbon atoms, ethers having 10 to 40 carbon atoms and mixtures thereof, preferably from the group consisting of aliphatic alcohols having 10 to 40 carbon atoms, esters having 10 to 40 carbon atoms and mixtures thereof, and
(iv) a UV absorber.

A more particular preferred thermochromic composition comprises
i) an electron-donating colour former of formula 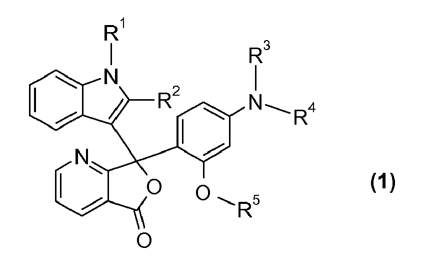 wherein R¹ is C₇₋₉-alkyl such as heptyl, octyl and nonyl, and R², R³, R⁴ and R⁵ are the same or different and are C₁₋₂-alkyl such as ethyl and methyl,
ii) an electron-accepting colour developer of formula 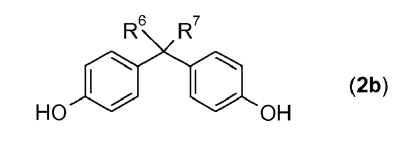 wherein R⁶ and R⁷ are the same or different and are hydrogen, C₁₋₄-alkyl, preferably C₁₋₂-alkyl,
(iii) a compound which adjusts the colour change temperature, which compound is a mixture of an aliphatic alcohol having 10 to 40 carbon atoms, preferably a saturated aliphatic alcohols having 10 to 30 carbon atoms, more preferably a saturated aliphatic alcohols having 14 to 20 carbon atoms and an ester having 10 to 40 carbon atoms, preferably an ester of an aliphatic alcohol and an aliphatic carboxylic acid having in total 10 to 40 carbon atoms, more preferably ester of an aliphatic alcohol and an aliphatic carboxylic acid having 24 to 32 carbon atoms, and
(iv) a benzotriazole-based UV absorbers.

The most particular preferred thermochromic composition comprises
i) the electron-donating colour former of formula 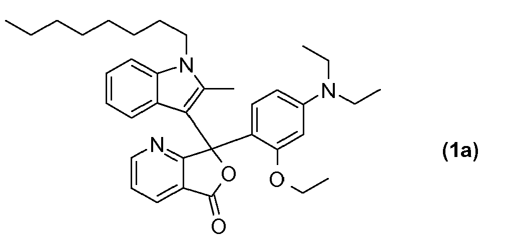
ii) the electron-accepting colour developer of formula 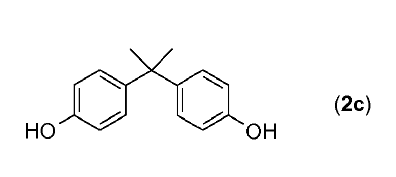
(iii) a compound which adjusts the colour change temperature, which compound is a mixture of cetyl alcohol and lauryl palimate, and
iv) the UV absorber 2-(3-*tert*-butyl-2-hydroxy-5-methylphenyl)-5-chlorobenzotriazole.

The thermochromic composition of the present invention can comprise from 0.5 to 40% by weight of the an electron-donating colour former of formula (1), from 1 to 50% by weight of the an electron-accepting colour developer of formula (2), from 20 to 99% by weight of the compound which adjusts the colour change temperature, from 0 to 20% by weight of a UV absorber and from 0 to 20% by weight of additional compounds, based on the weight of the composition.

The thermochromic composition of the present invention can comprise from from 1 to 20% by weight of the an electron-donating colour former of formula (1), from 1 to 30% by weight of the an electron-accepting colour developer of formula (2), from 40 to 95% by weight of the compound which adjusts the colour change temperature, from 0 to 20% by weight of a UV absorber, and from 0 to 20% by weight of additional compounds, based on the weight of the composition.

The thermochromic composition of the present invention can comprise from 1 to 10% by weight of the an electron-donating colour former of formula (1), from 1 to 15% by weight of the an electron-accepting colour developer of formula (2), from 60 to 90% by weight of the compound which adjusts the colour change temperature, from 1 to 10% by weight of a UV absorber, and from 0 to 20% by weight of additional compounds, based on the weight of the composition.

The thermochromic composition of the present invention can comprise from 3 to 10% by weight of the an electron-donating colour former of formula (1), from 5 to 15% by weight of the an electron-accepting colour developer of formula (2), from 70 to 85% by weight of the compound which adjusts the colour change temperature, from 1 to 10% by weight of a UV absorber, and from 0 to 20% by weight of additional compounds, based on the weight of the composition.

Also part of the present invention is a process for the preparation of the thermochromic composition of the present invention which comprises mixing the electron-donating colour former of formula (1), the electron-accepting colour developer of formula (2) and the compound which adjusts the colour change temperature and optionally a UV absorber and additional compounds, preferably at elevant temperature, for example in the range of from 50 to 150 °C, preferably from 80 to 130 °C.

Also part of the present invention are microcapsules comprising the thermochromic composition of the present invention. Microcapsules comprising a thermochromic composition are often referred to as thermochromic pigments in the literature.

The microcapsules comprising the thermochromic composition of the present invention also comprise a polymer shell, which encapsulates the thermochromic composition of the present invention.

The polymer shell can comprise one or more polymers selected from the group consisting of acrylic polymers, styrene polymers, styrene polymer derivatives, vinyl polymers, vinyl polymer derivatives, polyolefins, polyolefin derivatives, aldehyde polymers, aldehyde polymer derivatives, epoxide polymers, polyamides, polyesters, polyurethanes, polyisocyanates, polyketones, polysulfones, silicium-based polymers, natural polymers, natural polymer derivatives and mixtures thereof.

Acrylic polymers can be polymers formed from a monomer mixture comprising at least one acrylic monomer and optionally other ethylenically unsaturated monomer such as a styrene monomer, vinyl monomer, olefin monomer or α, β-unsaturated carboxylic acid monomer by polymerization of the respective monomers.

Examples of acrylic monomers are (meth)acrylic acid, (meth)acrylamide, (meth)acrylonitrile, ethyl (meth)acrylate, butyl (meth)acrylate, hexyl (meth)acrylate, 2-ethylhexyl (meth)acrylate, glycidyl methacrylate, acetoacetoxyethyl methacrylate, dimethylaminoethyl acrylate and diethylaminoethyl acrylate. Examples of styrene monomers are styrene, 4-methylstyrene and 4-vinylbiphenyl. Examples of vinyl monomers are vinyl alcohol, vinyl chloride, vinylidene chloride, vinyl isobutyl ether and vinyl acetate. Examples of olefin monomers are ethylene, propylene, butadiene and isoprene and chlorinated or fluorinated derivatives thereof such as tetrafluroethylene. Examples of α, β-unsaturated carboxylic acid monomers are maleic acid, itaconic acid, crotonic acid, maleic anhydride and maleimide.

Examples of acrylic polymers are poly(methyl methacrylate) and poly(butyl methacrylate), polyacrylic acid, styrene/2-ethylhexyl acrylate copolymer, styrene/acrylic acid copolymer.

Styrene polymers can be polymers formed from a monomer mixture comprising at least one styrene monomer and optionally at least one vinyl monomer, olefin monomer and/or α, β-unsaturated carboxylic acid monomer by polymerization of the respective monomers. Examples of styrene polymers are polystyrene (PS), styrene butadiene styrene block polymers, styrene ethylene butadiene block polymers, styrene ethylene propylene styrene block polymers and styrene-maleic anhydride copolymers. So-called "hydrocarbon resins" are usually also styrene polymers.

Styrene polymer derivatives are modified styrene polymers. The modification can be, for example, performed after polymerisation. An example of a styrene polymer derivative is a hydrogenated styrene polymer.

Vinyl polymers can be polymers formed from a monomer mixture comprising at least one vinyl monomer and optionally at least one olefin monomer and/or α, β-unsaturated carboxylic acid monomer by polymerization of the respective monomers. Examples of vinyl polymers are polyvinyl chloride (PVC), polyvinyl pyrrolidone, polyvinylidenfluoride, polyvinylalcohol, polyvinylacetate and methyl vinyl ether-maleic anhydride copolymers.

Vinyl polymers derivatives are modified vinyl polymers. The modification can be, for example, performed after polymerisation. An example of a vinyl polymer derivative is partially hydrolysed polyvinyl acetate.

Polyolefins can be polymers formed from a monomer mixture comprising at least one olefin monomer and optionally at least one α, β-unsaturated carboxylic acid monomer by polymerization of the respective monomers. Examples of polyolefines are low-density polyethylene (LDPE), high-density polyethylene (HDPE), polypropylene (PP), biaxially orientated polypropylene (BOPP), polybutadiene, perfluoroethylene (Teflon), isopropylene-maleic anhydride copolymer.

Polyolefin derivatives are modified polyolefins. The modification can be, for example, performed after polymerisation. Examples of a polyolefin derivative are hydrolysed ethylene-maleic anhydride copolymer, and hydrogenated polyolefins.

Aldehyde polymers can be polymers formed from at least one aldehyde monomer or polymer and at least one alcohol monomer or polymer, amine monomer or polymer and/or urea monomer or polymer. Examples of aldehyde monomers are formaldehyde, furfural and butyral. Examples of alcohol monomers are phenol, cresol, resorcinol and xylenol. An example of a polyalcohol is polyvinyl alcohol. Examples of amine monomers are aniline and melamine. Examples of urea monomers are urea, thiurea and dicyandiamide. Examples of aldehyde polymers are polyvinyl butyral formed from butyral and polyvinyl alcohol, melamine-formaldehyde polymer and urea-formaldehyde polymer. Aldehyde polymers formed from phenol and an aldehyde are called "phenol resins".

Aldehyde polymer derivatives are modified aldehyde polymers. The modification can be, for example, performed after polymerisation.Examples of modified aldehyde polymer derivatives are alkylated aldehyde polymers such as methylated melamine-formaldehyde polymer.

Epoxide polymers can be polymers formed from at least one epoxide monomer and at least one alcohol monomer and/or amine monomer. Examples of epoxide monomers are epichlorohydrine and glycidol. Examples of alcohol monomers are phenol, cresol, resorcinol, xylenol, bisphenol A and glycol. An example of epoxide polymer is phenoxy resin, which is formed from epichlorihydrin and bisphenol A.

Polyamides can be polymers containing repeating "amide" units in the polymer backbone. They can be polymers formed from at least one monomer having an amide group or an amino as well as a carboxy group or from at least one monomer having two amino groups and at least one monomer having two carboxy groups. An example of a monomer having an amide group is caprolactam. An example of a diamine is 1,6-diaminohexane. Examples of dicarboxylic acids are adipic acid, terephthalic acid, isophthalic acid and 1,4-naphthalenedicarboxylic acid. Examples of polyamides are polyhexamethylene adipamide and polycaprolactam.

Polyesters can be polymers containing repeating "ester" units in the polymer backbone. They can be polymers formed from at least one monomer having a hydroxy as well as a carboxy group, anhydride group or lactone group or from at least one monomer having two hydroxy groups and at least one monomer having two carboxy groups, anhydride groups or a lactone group. An example of a monomer having a hydroxy as well as a carboxy group is adipic acid. An example of a diol is ethylene glycol. An example of a monomer having a lactone group is carprolactone. Examples of dicarboxylic acids are terephthalic acid, isophthalic acid and 1,4-naphthalenedicarboxylic acid. An example of a polyester is polyethylene terephthalate (PET). Polyesters formed from an alcohol and an acid or acid anhydride are called "alkyd resins".

Polyurethane can be polymers containing repeating "urethane" units in the polymer backbone. They can be polymers formed from at least one diisocyanate monomer and at least one polyol monomer and/or polyamine monomer. Examples of diisocyanate monomers are hexamethylene diisocyanate, toluene diisiocyanate, isophorone diisocyanate and diphenylmethane diisocyanate.

Polyketones can be polymers containing repeating "C=O" units in the polymer backbone. An example of a polyketone is a polymer formed from ethylene and carbon monoxide.

Polysulfones can be polymers containing repeating "sulfone" units in the polymer backbone. An example of a polysulfone is a polymer formed from 4,4-dichlorodiphenyl sulfone and bisphenol A.

Examples of silicum-based polymers are polysilicates, silicone resins and polysiloxanes.

Examples of natural polymers are starch, cellulose, gelatine, casein, rosin, terpene resin, shellac, copal Manila, asphalts, gum Arabic and natural rubber.

Natural polymer derivatives are modified natural polymers. Examples of natural polymer derivatives are dextrin, oxidised starch, starch-vinyl acetate graft copolymers, hydroxyethyl cellulose, hydroxypropyl cellulose, nitrocellulose, methyl cellulose, ethyl cellulose, carboxymethyl cellulose, acetyl cellulose, acetyl propionyl cellulose, acetyl butyryl cellulose, propionyl cellulose, butyryl cellulose and chlorinated rubber.

Preferably, the polymer shell consists of one or more polymers selected from the group consisting of acrylic polymers, styrene polymers, styrene polymer derivatives, vinyl polymers, vinyl polymer derivatives, polyolefins, polyolefin derivatives, aldehyde polymers, aldehyde polymer derivatives, epoxide polymers, natural polymers, natural polymer derivatives and mixtures thereof.

More preferably, the polymer shell consists of one or more polymers selected from the group consisting of polyolefins, polyolefin derivatives, aldehyde polymers, aldehyde polymer derivatives, epoxide polymers and mixtures thereof.

Most preferably, the polymer shell consists of one or more polymers selected from the group consisting of polyolefins, polyolefin derivatives, aldehyde polymers, aldehyde polymer derivatives and mixtures thereof.

In a preferred embodiment the polymer shell consists of a mixture of a polyolefin or, preferably, a polyolefin derivative such as hydrolysed ethylene-maleic anhydride copolymer and an aldehyde polymer or, preferably, an aldehyde polymer derivative such as methylated melamine-formaldehyde polymer.

The weight ratio of aldehyde polymer/polyolefin can be from 30/1 to 1/10, preferably from 20/1 to 1/5, more preferably from 10/1 to 1/1 and most preferably 8/1 to 2/1.

The weight ratio of thermochromic composition/polymer shell can be from 50/1 to 1/50, from 20/1 to 1/20, from 10/1 to 1/10, preferably from 10/1 to 1/1, more preferably from 7/1 to 1/1.

The average diameter of the microcapsules can be from 0.1 to 500 µm, preferably from 0.5 to 100 µm, more preferably from 1 to 10 µm.

Also part of the present invention is an aqueous dispersion comprising the microcapsules comprising the thermochromic composition of the present invention.

Also part of the present invention is a process for the preparation of the aqeous dispersion comprising the microcapsules comprising the thermochromic composition of the present invention, which process comprises the steps of
(i) mixing the thermochromic composition with an aqueous phase comprising monomers, prepolymers and/or polymers suitable for forming the polymer shell in order to form an oil-in-water emulsion, and
(ii) forming the polymer shell.

For example, a thermochromic composition can be mixed with a aqueous phase comprising hydrolysed alternating ethylene-maleic anhydride copolymer and methylated melamine formaldehyde precondensate in the presence of formic acid at elevanted temperature, for example 40 to 100°C, to form an oil-in-water emulsion, and to form the polymer shell.

The aqueous dispersion comprising the microcapsules comprising the thermochromic composition of the present invention can comprise from 1 to 80% by weight, preferably from 10 to 70% by weight, more preferably from 20 to 60% by weight, most preferably from 40 to 55% by weight of the microcapsules comprising the thermochromic composition of the present invention, based on the weight of the aqueous dispersion.

The microcapsules can be obtained from the aqueous dispersion comprising the microcapsules by methods known in the art, for example by filtration, centrifugation or by drying (removal of water).

Also part of the present invention is an ink composition comprisig the microcapsules which comprise the thermochromic composition of the present invention.

The ink composition preferably also comprises a binder. The binder can comprise one or more polymers selected from the group consisting of acrylic polymers, styrene polymers, styrene polymer derivatives, vinyl polymers, vinyl polymer derivatives, polyolefins, polyolefin derivatives, aldehyde polymers, aldehyde polymer derivatives, epoxide polymers, polyamides, polyesters, polyurethanes, polyisocyanates, polyketones, polysulfones, silicium-based polymers, natural polymers, natural polymer derivatives and mixtures thereof. Definitions of these polymers are given above. Preferably, the ink composition comprises an acrylic binder.

The ink composition preferably comprises a solvent, preferably an aqueous solvent such as water or a mixture of water and one or more organic, preferably water-miscible, solvents. More preferably, the ink composition comprises water as aqueous solvent.

The ink composition is in particular an ink composition suitable for printing.

The ink composition can comprise from 1 to 70% by weight of the microcapsules comprising the thermochromic composition of the present invention, from 5 to 80% by weight of the binder and from 10 to 90% by weight of the solvent, based on the weight of the ink composition.

The ink composition can comprise from 5 to 25% by weight of the microcapsules comprising the thermochromic composition of the present invention, from 10 to 50% by weight of the binder and from 20 to 70% by weight of the solvent, based on the weight of the ink composition.

The ink composition can comprise from 10 to 20% by weight of the microcapsules comprising the thermochromic composition of the present invention, from 20 to 40% by weight of the binder and from 30 to 60% by weight of the solvent, based on the weight of the ink composition.

The ink composition can be prepared, for example, by mixing (ia) the aqueous dispersion comprising the microcapsules which comprise the thermochromic composition or (ib) the microcapsules which comprise the thermochromic composition with (iia) a binder and a solvent, or with (iib) a mixture of a binder and a solvent.

Also part of the present invention is the use of the microcapsules comprising the thermochromic composition of the present invention as additive for an ink composition

Also part of the present invention are substrates printed with the ink composition comprising the microcapsules which comprise the thermochromic composition of the present invention.

Examples of substrates are paper, cardboard, wood, leather, metals, textiles, polymers and glass.

Textiles can be made from natural fibres such as fibres from animal or plant origin, or from synthetic fibres. Examples of natural fibres from animal origin are wool and silk. Examples of natural fibres from plant origin are cotton, flax and jute. Examples of synthetic textiles are polyester, polyacrylamide, polyolefins such as polyethylene and polypropylene and polyamides such as nylon and lycra.

Examples of polymers are acrylic polymers, styrene polymers, styrene polymer derivatives, vinyl polymers, vinyl polymer derivatives, polyolefins, polyolefin derivatives, aldehyde polymers, aldehyde polymer derivatives, epoxide polymers, polyamides, polyesters, polyurethanes, polyisocyanates, polyketones, polysulfones, silicium-based polymers, natural polymers, natural polymer derivatives and mixtures thereof. Definitions of these polymers are given above.

Examples of glass are soda lime glass and borosilicate glass.

Preferred substrates are paper, cardboard, textiles and polymers, in particular paper and polymers.

Also part of the present invention is a process for preparing substrates printed with the ink composition comprising the microcapsules which comprise the thermochromic composition of the present invention, which process comprises the steps of (i) printing the ink composition comprising the microcapsules which comprise the thermochromic composition of the present invention on the substrate (ii) drying the ink composition in order to obtain a print layer.

The printing can be performed using printing techniques known in the art such as flexographic, gravure, offset and screen printing.

The printed substrates of the present invention can be used in security applications such as in anti-counterfeiting applications, for example bank notes, secure documents, lottery tickets, entry tickets, and brand protection, in packaging applications such as in the packaging of cool and hot drinks and food, or in design applications such as magazines, toys and clothing.

The thermochromic compositions of the present invention have the advantage that they show improved light-fastness. The thermochromic composition of the present invention comprising Ciba® Pergascript® Blue I-2G (7-[4-(diethylamino)-2-ethoxy-phenyl]-7-(2-methyl-1-octyl-1 H-indol-3-yl)furo[3,4-b]pyridin-5(7H)-one) are blue in the coloured state. The thermochromic composition of the present invention comprising a mixture of cetyl alcohol and lauryl palmitate, wherein the molar ratio of cetyl alcohol/lauryl palmitate is from 3/1 to 2/1, show a colour change temperature of around 27 °C (in the range of 24 to 33 °C). The microcapsules comprising the thermochromic composition of the present invention change from the coloured to the colourless state upon heating, and then on cooling revert back to the coloured state. The process is reversible.

### Examples

### Example 1

### Preparation of an aqueous dispersion of a thermochromic pigment comprising Ciba® Pergascript® Blue I-2G as colour former

An aqueous phase is prepared by mixing 21.7 g of ZeMac E400 (a 20% by weight solution of a hydrolysed alternating ethylene-maleic anhydride copolymer of a molecular weight of approximately 400'000 g/mol), 12.75 g of Beetle® Resin PT336 (a 70% by weight aqueous solution of a methylated melamine-formaldehyde precondensate), 83.5 g of deionised water and 1.6 g of a 90% by weight aqueous solution of formic acid.

Separatetly a homogeneous oil phase is prepared by heating a mixture consisting of 43 g cetyl alcohol, 32 g lauryl palmitate, 7 g Ciba® Pergascript® Blue I-2G (7-[4-(diethylamino)-2-ethoxy-phenyl]-7-(2-methyl-1-octyl-1 H-indol-3-yl)furo[3,4-b]pyridin-5(7H)-one), 12 g bisphenol A and 7 g of Ciba® Tinuvin® 326 (2-(2'-hydroxy-3'-*tert*-butyl-5'-methylphenyl)-5-chlorobenzotriazole) to 120 °C.

The hot oil phase is added to the aqueous phase under a high shear mixer to form an oil-in-water emulsion. The temperature of the emulsion is kept above 50 °C during the homogenisation. The resulting emulsion is transferred to a 700 mL reaction flask and mechanically stirred for 1 hour at 35°C. After, this period, further 19.2 g of Beetle® Resin PT336 (a 70% by weight aqueous solution of a methylated melamine-formaldehyde precondensate) is added and the aqueous mixture is warmed to 55 °C and held at this temperature for 3 hours. Next, the mixture is heated to 70 °C and the curing reaction is continued for 2 hours. The formed blue coloured microcapsule dispersion was then cooled to 22 °C and 9.2 g of a 10% by weight aqueous solution of sodium hydroxide is added to adjust the pH of aqueous dispersion to pH 7.0.

The aqueous dispersion of the thermochromic pigment obtained shows a colour change temperature of around 27°C.

### Example 2

### Preparation of an aqueous dispersion of a thermochromic pigment comprising Ciba® Pergascript® Blue I-2G as colour former

A thermochromic pigment is prepared in analogy to example 1, but the oil phase consists of 46.8 g cetyl alcohol, 31.2 g lauryl palmitate, 6.6 g Ciba® Pergascript® Blue I-2G (7-[4-(diethylamino)-2-ethoxy-phenyl]-7-(2-methyl-1-octyl-1H-indol-3-yl)furo[3,4-b]pyridin-5(7H)-one), 8.8 g bisphenol A and 6.6 g of Ciba® Tinuvin® 326 (2-(2'-hydroxy-3'-*tert*-butyl-5'-methylphenyl)-5-chlorobenzotriazole.

The aqueous dispersion of the thermochromic pigment obtained shows a colour change temperature of around 27 °C.

### Comparative example 1

### Preparation of an aqueous dispersion of a thermochromic pigment comprising Ciba® Pergascript® Blue I-2R C (crystal violet lactone) as colour former

A thermochromic pigment is prepared in analogy to example 2, but the oil phase contains 6.6 g of Ciba® Pergascript® Blue I-2R (crystal violet lactone) instead of 6.6 g Ciba® Pergascript® Blue I-2G (7-[4-(diethylamino)-2-ethoxy-phenyl]-7-(2-methyl-1-octyl-1H-indol-3-yl)-furo[3,4-b]pyridin-5(7H)-one).

The aqueous dispersion of the thermochromic pigment obtained shows a colour change temperature of around 27 °C.

### Testing of the light fastness properties of the thermochromic pigments of examples 1 and 2, of comparative example 1 and of Chromicolor® AQ Ink Fast Blue Type 27 (comparative example 2)

17 g of the aqueous dispersions of thermochromic Type 27 blue pigments of examples 1 and 2, of comparative example 1 as well as 17 g of Chromicolor® AQ Ink Fast Blue Type 27 sold by Matsui International (comparative example 2) are mixed with 33 g of Joncryl® 8050 (an acrylic emulsion, non-volatiles: 42%, pH (25 °C): 7.5, viscosity [mPa x s (25 °C)]: 750, acid value: 114, sold by BASF SE) to produce aqueous ink formulation comprising about 17% by weight of the thermochromic pigment based on the weight of the formulation. These ink formulations are coated on Apco II/II paper using K-bar number 2. The coated ink formulations are dried by hot air using a hair dryer. The coatings formed are then tested for light fastness with Blue Wool Scale references using a xenon arc lamp according to the International Standard Test Method ISO 12040. The coatings are exposed to Xenon Arc Lamp until it shows a perceptible change. The Blue Wool Scale number which shows a similar change is recorded.

The results of the light fastness testing of the three different formulations are summarized in Table 1

**Table 1.**

| Thermochromic Pigment dispersion | Colour Former | Light fastness score on Blue Wool Scale |
|---|---|---|
| Example 1 | Ciba® Pergascript® Blue I-2G | Score of 2 after 19 hours |
| Example 2 | Ciba® Pergascript® Blue I-2G | Score of 3 after 20 hours |
| Comparative example 1 | Pergascript® Blue® I-2R C | Score of 0 after 2 hours |
| Comparative example 2 | not known | Score of 1 after 8 hours |

From Table 1, it is apparent that the type 27 blue thermochromic pigments prepared according the present invention (example 1 and 2) have much higher light fastness properties compared to the thermochromic pigments of comparative examples 1 and 2.

## Claims

1. A thermochromic composition which comprises
i) an electron-donating colour former of formula 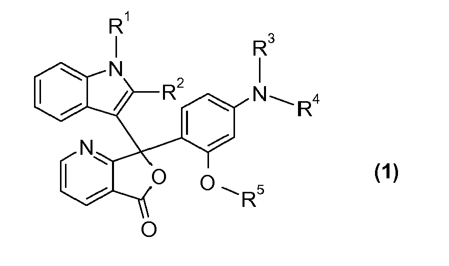 wherein R¹ is C₆₋₂₀-alkyl, and R², R³, R⁴ and R⁵ are the same or different and are C₁₋₆-alkyl,
ii) an electron-accepting colour developer of formula 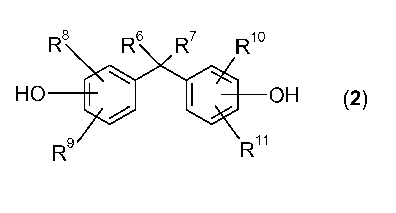 wherein R⁶ and R⁷ are the same or different and are hydrogen, C₁₋₂₀-alkyl, or R⁶ and R⁷ together with the linking carbon atom form a C₅₋₈-cycloalkylidene, and R⁸ and R⁹ are the same or different and are hydrogen, C₁₋₆-alkyl, halogen or hydroxyl,
or
an electron-accepting colour developer of formula 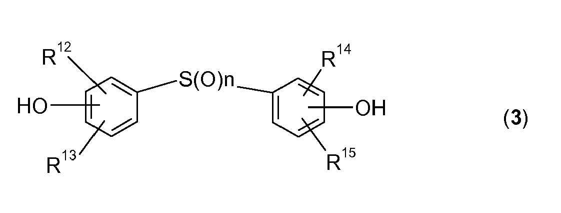 wherein n is 0, 1 or 2, and R¹², R¹³, R¹⁴ and R¹⁵ are the same or different and are hydrogen, C₁₋₆-alkyl, halogeno or hydroxyl,
and
iii) a compound which adjusts the colour change temperature.

2. The composition of claim 1, wherein R¹ is C₇₋₁₀-alkyl and R², R³, R⁴ and R⁵ are the same or different and are C₁₋₄-alkyl.

3. The composition of claim 1 or claim 2, wherein R¹ is C₇₋₉-alkyl, and R², R³, R⁴ and R⁵ are the same or different and are C₁₋₂-alkyl.

4. The composition of any of claims 1 to 3, wherein the colour former of formula (1) is the colour former of formula

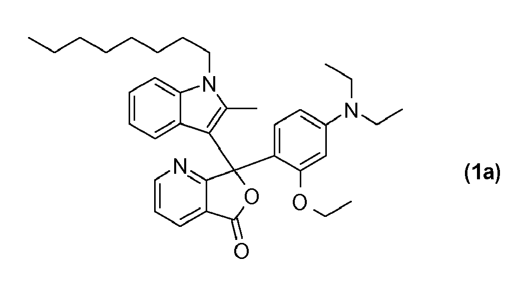

5. The composition of any of claims 1 to 4, wherein the electron-accepting colour developer of formula (2) is one of formula 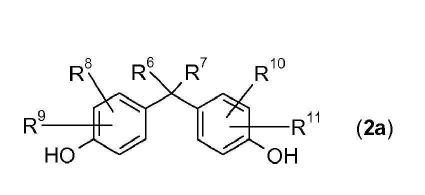 wherein R⁶ and R⁷ are the same or different and are hydrogen, C₁₋₄-alkyl, and R⁸ and R⁹ are the same or different and are hydrogen, C₁₋₆-alkyl, halogen or hydroxyl.

6. The colour composition of any of claims 1 to 5, wherein the electron-accepting colour developer of formula (2) is one of formula 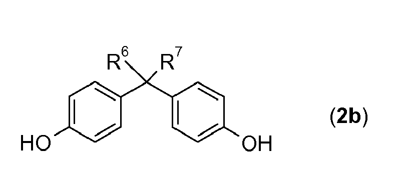 wherein R⁶ and R⁷ are the same or different and are hydrogen, C₁₋₄-alkyl.

7. The composition of any of claims 1 to 6, wherein the electron-accepting colour developer of formula (2) is the one of formula

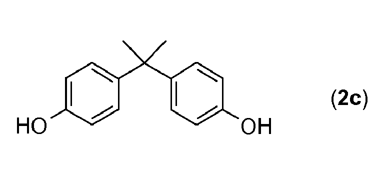

8. The composition of any of claims 1 to 7, wherein the compound which adjusts the colour change temperature is selected from the group consisting of aliphatic alcohols having 10 to 40 carbon atoms, esters having 10 to 40 carbon atoms, ketones having 10 to 40 carbon atoms, ethers having 10 to 40 carbon atoms and mixtures thereof.

9. The composition of claim 8, wherein the compound which adjusts the colour change temperature is selected from the group consisting of aliphatic alcohols having 10 to 40 carbon atoms, esters having 10 to 40 carbon atoms and mixtures thereof.

10. The composition of any of claims 1 to 7, wherein the compound which adjusts the colour change temperature is a wax-like compound, which wax-like compound is malleable at ambient temperature (18 to 25 °C), has a melting point in the range of 35 to 85 °C and is insoluble in water.

11. The composition of any of claims 1 to 10, which composition also comprises iv) a UV absorber.

12. The composition of claim 11, wherein the UV absorber is a benzotriazole-based UV absorber.

13. The composition of claim 12 wherein the UV absorber is 2-(3-*tert*-butyl-2-hydroxy-5-methylphenyl)-5-chlorobenzotriazole.

14. Microcapsules comprising the thermochromic composition of any of claim 1 to 13.

15. The microcapsules of claim 14, which microcapsules also comprise a polymer shell, which encapsulates the thermochromic composition of any of claims 1 to 7.

16. An aqueous dispersion comprising the microcapsules of claim 14 or claim 15.

17. An ink composition comprising the microcapsules of claim 14 or claim 15.

18. Use of the composition of claim 17 as printing ink.

19. A substrate printed with the composition of claim 17.
